# FASCICULE DE BREVET EUROPEEN

(11) **EP 4 570 630 B1**
(45) Date de publication et mention de la délivrance du brevet: **18.11.2026**
(21) Numéro de dépôt: 24219331.6
(22) Date de dépôt: 12.12.2024
(51) Int. Cl.: B62D 25/20

(54) **ASSEMBLAGE DE TRANSFERT D EFFORTS LONGITUDINAUX D'UN SOUBASSEMENT DE VÉHICULE AUTOMOBILE**
ANORDNUNG ZUR ÜBERTRAGUNG VON LÄNGSKRÄFTEN VON EINEM UNTERBAU EINES KRAFTFAHRZEUGS
ASSEMBLY FOR TRANSFERRING LONGITUDINAL FORCES FROM A MOTOR VEHICLE UNDERBODY

(30) Priorité: 15.12.2023 FR 2314260
(43) Date de publication de la demande: 18.06.2025
(73) Titulaire: RENAULT s.a.s., 92100 Boulogne-Billancourt (FR)
(72) Inventeur: BELAIDOUNI, Reda, 78280 GUYANCOURT (FR); MAUDUIT, Thomas, 78280 GUYANCOURT (FR)
(74) Mandataire: Renault Group

(56) Documents cités:
- EP-A1- 2 420 432
- DE-A1- 102019 211 103
- US-A1- 2009 108 633

## Description

La présente invention se rapporte à un assemblage de transfert d'efforts longitudinaux d'un soubassement de véhicule automobile, pouvant notamment être utilisé pour différents types de véhicule. L'invention se rapporte également à un soubassement équipé de l'assemblage de transfert d'efforts longitudinaux. Afin de limiter la multiplication des chaînes de montage et les coûts associés, les constructeurs utilisent des soubassements similaires pour les différentes motorisations d'un véhicule (véhicule thermique ou électrique ou hybride). A cet effet, il peut être avantageux de réaliser une partie de soubassement, par exemple une partie avant, commune pour les différents types de véhicule. Cette partie avant de soubassement comprend des longerons dont les efforts doivent pouvoir être transmis à une partie centrale du soubassement lors d'un choc avant. Or, lorsqu'il s'agit d'un véhicule électrique ou hybride, les longerons de cette partie centrale du soubassement sont globalement plus écartés latéralement que les longerons d'une partie centrale de véhicule thermique, ceci afin de pouvoir loger les packs de batterie du véhicule en dessous du soubassement. Il arrive également que d'un modèle de véhicule électrique/hybride à un autre, l'écartement des longerons soit différent. Il faut toutefois pouvoir assurer une transmission des efforts longitudinaux subis par les longerons avant vers les longerons de cette partie centrale. Les documents US 2009/108633 A1 et EP 2 420 432 A1 divulguent chacun un assemblage de transfert d'efforts longitudinaux selon le préambule de la revendication 1.

L'invention vise à surmonter tout ou partie des inconvénients susmentionnés en proposant un assemblage de transfert d'efforts longitudinaux d'un soubassement de véhicule automobile, comprenant :
- un profilé transversal, s'étendant dans une direction transversale de l'assemblage en position d'utilisation, de forme creuse à section en forme de U pourvue de rebords horizontaux en position d'utilisation,
- un profilé de liaison longitudinal, s'étendant perpendiculairement au profilé transversal, de forme creuse à section en forme de U pourvue de rebords horizontaux, dont l'ouverture est orientée dans la même direction que l'ouverture de la forme creuse du profilé transversal, le profilé de liaison présentant une extrémité arrière solidarisée au profilé transversal verticalement et longitudinalement, notamment via des extrémités arrière de ses rebords et des pattes de fixation arrière,
- au moins trois entretoises longitudinales disposées à l'intérieur du profilé transversal et solidaires de celui-ci, notamment longitudinalement, deux des entretoises étant disposées en regard de parois latérales longitudinales du profilé de liaison, une troisième entretoise étant disposée en une autre position destinée à être située en regard d'une paroi latérale longitudinale d'un longeron auquel l'assemblage doit être fixé.

En particulier, le profilé de liaison est destiné à être solidarisé à un longeron avant, le profilé transversal étant destiné à être solidarisé, d'un côté opposé au profilé de liaison, à un longeron central. L'assemblage selon l'invention permet alors, grâce à la forme spécifique des profilés et aux positions des entretoises, un transfert d'effort efficace entre le longeron avant, faisant par exemple partie d'une partie de soubassement avant, et un longeron central, faisant par exemple partie d'une partie de soubassement centrale, ces longerons n'étant pas alignés longitudinalement.

En particulier, le profilé transversal s'étendant suivant la direction transversale en position d'utilisation, l'assemblage selon l'invention permet d'utiliser de manière optimale l'espace entre l'assemblage et le longeron central, du fait notamment de l'absence de formes courbes ou de parties s'étendant suivant une direction qui n'est pas longitudinale ou transversale. Ceci peut permettre de loger des packs de batterie de plus grande dimension longitudinalement.

Lorsque des pièces sont solidarisées verticalement ou longitudinalement, elles sont solidarisées suivant la direction verticale ou longitudinale respectivement. Les pièces à assembler présentent alors des parties d'assemblage, notamment un rebord et/ou une patte de fixation, qui s'étendent perpendiculairement à la direction de solidarisation.

De manière générale, le profilé de liaison peut présenter au moins une partie, notamment une partie avant en position d'utilisation, présentant une forme complémentaire de l'intérieur du longeron auquel il est destiné à être fixé. Ceci lui permet d'épouser la forme intérieure du longeron auquel il doit être solidarisé.

De manière générale également, pour plus de robustesse, le profilé transversal peut être fermé à ses extrémités transversales par des parois d'extrémité.

Avantageusement, l'assemblage peut comprendre au moins deux éléments de renfort présentant chacun une paroi de renfort en appui contre une paroi de fond du profilé transversal et solidarisée à celle-ci. Chaque entretoise fait alors partie d'un élément de renfort et est reliée à la paroi de renfort d'un élément de renfort. Ceci peut améliorer la robustesse de l'assemblage.

Avantageusement, la paroi de renfort de chaque élément de renfort et la paroi de fond du profilé transversal peuvent alors être percées d'au moins un orifice traversant recevant un écrou soudé. Ceci peut permettre d'utiliser l'assemblage selon l'invention, et en particulier le profilé transversal, comme interface de fixation, pour y fixer un pack de batterie ou une protection de pack de batterie.

Avantageusement, l'extrémité arrière du profilé de liaison peut comporter des pattes de fixation arrière et les entretoises des pattes de fixation avant au profilé transversal. Les pattes de fixation arrière du profilé de liaison peuvent alors être situées en regard des pattes de fixation des entretoises, de part et d'autre d'une paroi latérale avant du profilé transversal. Ceci peut améliorer la transmission des efforts longitudinaux.

Avantageusement, l'assemblage selon l'invention peut comprendre en outre une première paroi assemblée aux rebords du profilé transversal et le fermant et une deuxième paroi assemblée aux rebords du profilé de liaison et le fermant. Ceci permet d'améliorer la robustesse de l'assemblage.

Avantageusement, les différents éléments de l'assemblage peuvent être en métal ou alliage métallique et être solidarisés les uns aux autres par soudure.

Avantageusement, quel que soit le mode de réalisation, l'assemblage selon l'invention peut comprendre une ou plusieurs des caractéristiques suivantes :
- le profilé transversal présente deux parois latérales reliées par une paroi de fond définissant la forme creuse à section en forme de U, chaque paroi latérale étant pourvue du rebord transversal horizontal,
- le profilé de liaison longitudinal présente deux parois latérales reliées par une paroi de fond définissant la forme creuse à section en forme de U et :
   - chaque paroi latérale du profilé de liaison est pourvue du rebord horizontal dont une extrémité arrière est solidarisée à un rebord transversal avant du profilé transversal, et d'une patte de fixation arrière transversale solidarisée à une paroi latérale avant dudit profilé transversal,
   - la paroi de fond du profilé de liaison est pourvue, du même côté que les pattes de fixation arrière, d'une patte de fixation solidarisée à la paroi de fond ou à la paroi latérale avant du profilé transversal,
   - chaque entretoise est fixée aux parois latérales du profilé transversal par des pattes de fixation avant et arrière.

L'invention a également pour objet un soubassement de véhicule automobile comprenant un longeron avant et un longeron central qui ne sont pas situés dans le prolongement l'un de l'autre longitudinalement, chaque longeron présentant deux parois latérales reliées par une paroi de fond définissant une forme creuse à section en forme de U, chaque paroi latérale étant pourvue d'un rebord longitudinal horizontal en position d'utilisation. Le soubassement selon l'invention comprend un assemblage selon l'invention reliant le longeron avant au longeron central, le profilé de liaison de l'assemblage présentant une forme épousant la forme intérieure du longeron avant et étant solidarisé au longeron avant, à l'intérieur de celui-ci, l'une des entretoises longitudinales de l'assemblage s'étendant dans le prolongement d'une paroi latérale du longeron central, une extrémité avant du longeron central étant solidarisée au profilé transversal verticalement et horizontalement.

Ainsi, malgré une absence d'alignement des longerons avant et central, l'assemblage selon l'invention permet un transfert efficace des efforts longitudinaux. Le longeron avant peut faire partie d'une partie de soubassement avant, par exemple commune à différents modèles de véhicule, alors que le longeron central peut faire partie d'une partie de soubassement centrale spécifique à un modèle de véhicule. On comprend dès lors qu'il est possible de réaliser des soubassements avec une partie avant commune, à savoir standard, et une partie centrale spécifique, tout en maintenant un transfert des efforts longitudinaux.

Le soubassement peut ainsi comprendre une partie avant de soubassement comprenant deux longerons avant et une partie centrale de soubassement comprenant deux longerons centraux, chaque longeron avant étant relié au longeron central correspondant par un assemblage selon l'invention, tel que précédemment décrit.

Avantageusement, l'extrémité avant du longeron central peut présenter des pattes de fixation transversales solidarisées au profilé transversal, notamment à sa paroi latérale arrière, des extrémités avant des rebords transversaux du longeron central étant solidarisées au rebord transversal arrière du profilé transversal, sous celui-ci. Avantageusement, pour une meilleure transmission des efforts, au moins une patte de fixation transversale avant du longeron central peut être située en regard, longitudinalement, d'une patte de fixation transversale arrière d'une entretoise, de part et d'autre d'une paroi latérale arrière du profilé transversal.

Un soubassement de véhicule comprend typiquement un plancher, qui peut être en une ou plusieurs parties, assemblé aux rebords des longerons et les fermant. Le profilé de liaison de l'assemblage peut alors être fermé par une première paroi faisant partie du plancher. Le profilé transversal de l'assemblage peut être fermé par une deuxième paroi qui fait partie du plancher ou qui est une paroi indépendante fixée au plancher, notamment sous ce dernier.

L'invention a également pour objet un véhicule automobile comprenant un soubassement selon l'invention.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue de dessous d'un soubassement selon un mode de réalisation selon l'invention.
[Fig. 2] représente une vue de dessous d'un assemblage selon un mode de réalisation de l'invention.
[Fig. 3] représente une vue de dessus en perspective d'un assemblage selon un mode de réalisation de l'invention relié à un longeron avant et un longeron central.
[Fig. 4] représente une vue en perspective du profilé de liaison de l'assemblage représenté figure 3.
[Fig. 5] représente une section longitudinale de l'assemblage de la figure 3 selon la ligne AA.
[Fig. 6] représente une autre vue de dessus en perspective de l'assemblage de la figure 3.

Les orientations exprimées dans la description des figures sont données en référence à un repère orthonormé XYZ classique d'un véhicule automobile, l'axe X représentant la direction longitudinale, orientée d'avant en arrière du véhicule, l'axe Y représentant la direction transversale du véhicule, orientée de la gauche vers la droite, et l'axe Z représente la direction verticale, orientée vers le haut, du véhicule.

Dans la suite de la description, les termes avant et arrière font référence de façon classique à l'avant et à l'arrière du véhicule automobile.

Par sensiblement horizontal, longitudinal ou vertical, on entend une direction/un plan formant un angle d'au plus ±20°, voire d'au plus ±10° ou d'au plus ±5°, avec une direction/un plan horizontal, longitudinal ou vertical.

Par sensiblement parallèle, perpendiculaire ou à angle droit, on entend une direction/un angle s'écartant d'au plus ±20°, voire d'au plus ±10° ou d'au plus ±5° d'une direction/d'un plan parallèle, perpendiculaire ou d'un angle droit.

Des références identiques pourront être utilisées d'une figure à l'autre pour désigner des éléments identiques ou similaires.

Dans la suite, la description est réalisée en considérant le soubassement et l'assemblage selon l'invention dans leur position d'utilisation à l'intérieur d'un véhicule, la position d'utilisation de l'assemblage étant une position assemblée au soubassement.

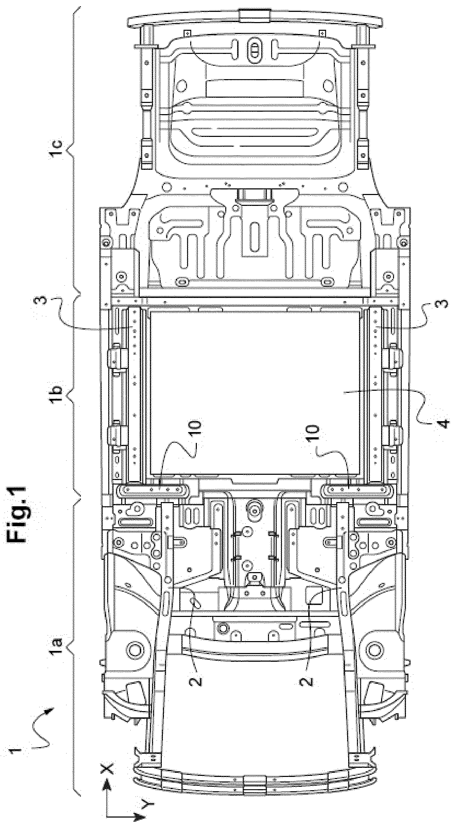

La figure 1 représente, vue de dessous, un soubassement 1 de véhicule, ici d'un véhicule à motorisation électrique. Ce soubassement 1 comprend deux longerons avant 2 et deux longerons centraux 3. Un pack de batterie 4 est en outre représenté schématiquement. Les longerons avant 2 font partie d'une partie de soubassement avant 1a et les longerons centraux 3 font partie d'une partie de soubassement centrale 1b. Le soubassement comprend également une partie de soubassement arrière 1c. Ces différentes parties sont assemblées les unes aux autres pour former le soubassement.

Comme on peut le constater, chaque longeron central 3 est décalé transversalement, ici vers l'extérieur du véhicule, du longeron avant 2 correspondant. Dit autrement, chaque longeron central 3 ne s'étend pas dans la continuité d'un longeron avant 2 longitudinalement.

De manière usuelle, chaque longeron 2, 3 présente deux parois latérales 200, 201 ; 300, 301 respectivement, reliées par une paroi de fond 202, 302 respectivement, ces parois latérales et de fond définissant une forme creuse à section en forme de U. Chaque paroi latérale 200, 201 ; 300, 301 est pourvue d'un rebord longitudinal horizontal 203, 204 ; 303, 304 respectivement, en position d'utilisation du soubassement. Les longerons sont ouverts vers le haut et habituellement fermés par le plancher du véhicule qui peut être en une ou plusieurs parties.

L'assemblage 10 selon l'invention permet de relier ces longerons avant et central afin d'assurer un transfert des efforts longitudinaux. Ainsi, l'assemblage 10 est solidarisé à une extrémité arrière du longeron avant 2 et à une extrémité avant du longeron central 3.

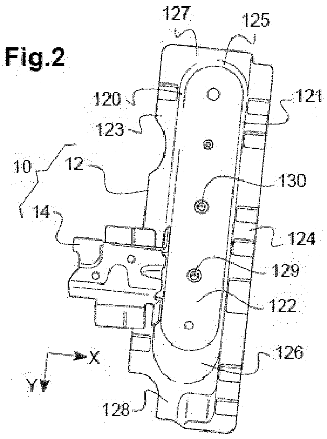

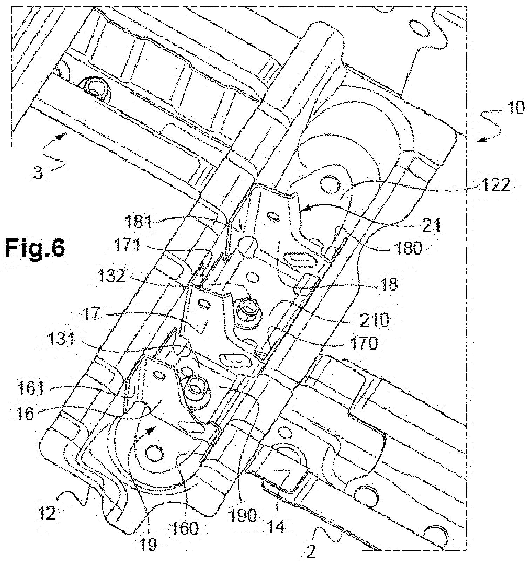

A cet effet, l'assemblage 10 comprend un profilé transversal 12 de forme creuse à section en forme de U pourvue de rebords horizontaux, un profilé de liaison longitudinal 14 de forme creuse à section en forme de U pourvue de rebords horizontaux, et des entretoises 16, 17, 18 longitudinales disposées à l'intérieur du profilé transversal 12 et solidaires de celui-ci. Un mode de réalisation de ces éléments est décrit plus en détail en référence aux figures 2 à 6.

Le profilé transversal 12 s'étend dans une direction transversale du véhicule en position d'utilisation de l'assemblage 10, et présente ici deux parois latérales 120, 121, à savoir une paroi latérale avant 120 dirigée vers l'avant du véhicule en position d'utilisation de l'assemblage 10, et une paroi latérale arrière 121 dirigée vers l'arrière du véhicule en position d'utilisation de l'assemblage 10, ces parois latérales 120, 121 étant reliées par une paroi de fond 122. Ces parois latérales 120, 121 et de fond 122 définissent ainsi une forme creuse à section en forme de U, dont l'ouverture est dirigée vers le haut en position d'utilisation de l'assemblage 10. Chaque paroi latérale avant 120 et arrière 121 est pourvue d'un rebord transversal horizontal avant 123 et arrière 124 respectivement, en position d'utilisation de l'assemblage 10. La paroi de fond 122 s'étend typiquement horizontalement. La forme de la section du profilé transversal 12 (section longitudinale), est donc similaire à un Ω.

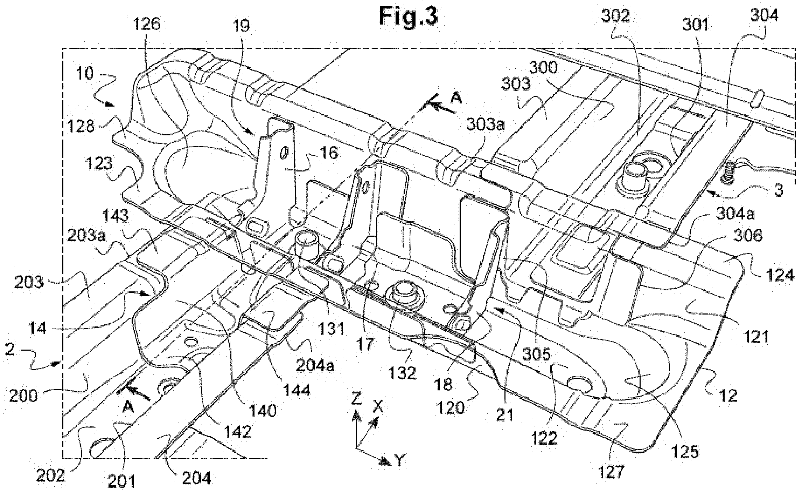

De préférence, le profilé transversal 12 est fermé à ses extrémités transversales par des parois d'extrémités 125, 126, de forme arrondie dans l'exemple représenté. L'invention n'est toutefois pas limitée à une forme particulière des parois d'extrémités qui pourraient être des parois planes. Ces parois d'extrémités 125, 126, sont également pourvues de rebords horizontaux 127, 128 respectivement (voir figures 2 et 3). Notamment, tel que représenté dans l'exemple, les rebords 123, 124, 127 et 128 font tout le tour du profilé transversal 12. Le profilé transversal 12 est typiquement une pièce métallique réalisée par emboutissage.

Le profilé de liaison longitudinal 14 s'étend perpendiculairement au profilé transversal 12. Il est fixé à ce dernier du côté avant du profilé transversal 12. Le profilé de liaison 14 présente deux parois latérales 140, 141 reliées par une paroi de fond 142, ces parois 140-142 définissant une forme creuse à section en forme de U dont l'ouverture est orientée dans la même direction que l'ouverture de la forme creuse du profilé transversal 12. Le profilé de liaison présente avantageusement une partie de forme complémentaire de la forme intérieure du longeron auquel il doit être fixé afin d'en épouser la forme lors de son assemblage. Cette partie de forme complémentaire peut avantageusement s'étendre sur une partie de sa longueur, le reste du profilé de liaison servant alors à sa fixation au profilé transversal.

La paroi de fond 142 s'étend typiquement sensiblement horizontalement.

Chaque paroi latérale 140, 141 du profilé de liaison est pourvue d'un rebord longitudinal horizontal 143, 144 respectivement, en position d'utilisation de l'assemblage dont une extrémité arrière 143a, 144a est solidarisée au rebord transversal horizontal avant 123 du profilé transversal 12 (voir figure 3). Chaque paroi latérale 140, 141 du profilé de liaison 14 comprend également une patte de fixation transversale arrière 145, 146 respectivement, solidarisée à la paroi latérale avant 120 du profilé transversal 12. Enfin, la paroi de fond 142 du profilé de liaison 14 est pourvue, du même côté que les pattes de fixation transversale arrière 145, 146, d'une patte arrière de fixation 147 solidarisée à la paroi latérale avant 120 du profilé transversal 12. Cette patte arrière de fixation 147 s'étend ainsi perpendiculairement ou sensiblement perpendiculairement à la paroi de fond 142 dans l'exemple représenté.

Dans un mode de réalisation non représenté, la patte arrière de fixation 147 peut être solidarisée à la paroi de fond 122 du profilé transversal. La patte arrière de fixation 147 s'étend alors dans le prolongement, ou sensiblement dans le prolongement, de la paroi de fond 142 du profilé de liaison et est solidarisée à la paroi de fond 122, sous cette dernière.

L'assemblage 10 selon l'invention comprend enfin, dans l'exemple représenté, trois entretoises longitudinales 16, 17, 18 disposées à l'intérieur du profilé transversal 12, perpendiculairement à ses parois latérales avant 120 et arrière 121. Chaque entretoise 16, 17, 18 est fixée aux parois latérales avant 120 et arrière 121 du profilé transversal 12 par des pattes de fixation, deux des entretoises 16, 17 étant disposées en regard, et notamment dans le prolongement, des parois latérales longitudinales 140, 141 du profilé de liaison, une troisième entretoise 18 étant disposée en une position en regard, et notamment dans le prolongement, de la paroi latérale longitudinale 300 du longeron central 3 auquel l'assemblage 10 doit être fixé (voir figure 3).

Notamment, chaque entretoise 16, 17, 18 présente une patte de fixation avant 160, 170, 180 respectivement, fixée à la paroi latérale avant 120 du profilé transversal 12, et une patte de fixation arrière 161, 171, 181 respectivement, fixée à la paroi latérale arrière 121 du profilé transversal 12.

Dans l'exemple, les pattes de fixation avant 160, 170 et arrière 161, 171 des entretoises 16, 17 définissent une forme en U avec celle-ci, alors que les pattes de fixation avant 180 et arrière 181 de l'entretoise 18 définissent une forme en S avec celle-ci. L'invention n'est toutefois pas limitée à ce mode de réalisation et n'importe quelle entretoise pourrait définir une forme de U ou de S avec ses pattes de fixation. Dans l'exemple représenté, trois entretoises 16-18 sont prévues. L'invention n'est toutefois pas limitée par le nombre d'entretoises utilisé bien que trois entretoises suffisent au transfert des efforts longitudinaux et à la robustesse de l'assemblage. On pourrait notamment envisager de positionner plus de trois entretoises à l'intérieur du profilé transversal selon la longueur de ce dernier transversalement. A titre d'exemple une quatrième entretoise pourrait être prévue et positionnée en regard de l'autre paroi latérale longitudinale 301 du longeron central 3 auquel l'assemblage doit être fixé. On pourrait également envisager de remplacer les parois d'extrémités 125, 126 par des entretoises.

Quelle que soit la forme du profilé transversal, lorsque seules trois entretoises sont prévues, pour une plus grande robustesse, la troisième entretoise 18 peut avantageusement être positionnée en regard de la paroi latérale 300 du longeron central 3 située la plus proche latéralement du longeron avant 2, autrement dit la plus proche latéralement des autres entretoises.

Dans l'exemple représenté, l'assemblage 10 comprend en outre deux éléments de renfort 19, 21 présentant chacun une paroi de renfort 190, 210 en appui contre la paroi de fond 122 du profilé transversal 12 et solidarisée à celle-ci. Chaque entretoise 16-18 fait ici partie d'un élément de renfort et est reliée à la paroi de renfort 190, 210 d'un élément de renfort. En particulier, dans cet exemple, un premier élément de renfort 19 est formé de la paroi de renfort 190 reliée aux entretoises 16, 17. La paroi de renfort 190 remonte ici également sur la paroi latérale arrière 121 du profilé transversal à laquelle elle est solidarisée (voir fig. 3), mais pourrait s'étendre uniquement contre la paroi de fond. Ce premier élément de renfort 19 est ici réalisé d'une pièce avec les entretoises 16, 17. Le deuxième élément de renfort 21 est formé de la paroi de renfort 210 reliée à l'entretoise 18. La paroi de renfort 210 remonte ici également sur la paroi latérale arrière 121 du profilé transversal à laquelle elle est solidarisée, mais pourrait s'étendre uniquement contre la paroi de fond. Ce deuxième élément de renfort 21 est ici réalisé d'une pièce avec l'entretoise 18. L'invention n'est toutefois pas limitée à cet agencement particulier des éléments de renfort, lesquels peuvent présenter uniquement les entretoises et parois de renfort. En outre, d'autres modes de liaison des entretoises par les éléments de renfort sont envisageables. Par exemple, un élément de renfort pourrait être relié aux entretoises 17 et 18 et un autre à l'entretoise 16, ou trois éléments de renfort pourraient être prévus, reliés chacun à une entretoise. Le mode de réalisation décrit en référence aux figures est toutefois avantageux lorsque les longerons sont relativement proches latéralement.

Ces éléments de renfort 19, 21 peuvent permettre de renforcer des interfaces de fixation pour un pack de batterie ou pour un boîtier protecteur de pack de batterie réalisées au niveau du profilé transversal. A cet effet, la paroi de fond 122 du profilé transversal est percée d'orifices traversant 129, 130 (fig. 2) auxquels correspondent des orifices traversant (non visibles sur les figures) de la paroi de renfort 190, 210 de chaque élément de renfort 19, 21. Ces orifices traversant mis en correspondance reçoivent chacun un écrou soudé 131, 132 respectivement, disposé à l'intérieur du profilé transversal. Dans l'exemple, chaque élément de renfort 19, 21 est percé d'un seul orifice pourvu d'un écrou soudé 131, 132. L'invention n'est toutefois pas limitée à ce mode de réalisation et davantage d'orifices peuvent être prévus selon l'objectif souhaité et les dimensions des éléments de renfort et notamment des parois de renfort.

Pour une transmission optimale des efforts longitudinaux, on pourra positionner les pattes de fixation transversales arrière 145, 146 du profilé de liaison 14 en regard (longitudinalement) des pattes de fixation avant 160, 170 respectivement des entretoises 16, 17 de part et d'autre de la paroi latérale avant 120 du profilé transversal.

Également pour une transmission optimale des efforts longitudinaux, l'assemblage 10 peut comprendre une première paroi assemblée aux rebords du profilé transversal et le fermant et une deuxième paroi assemblée aux rebords du profilé de liaison et le fermant.

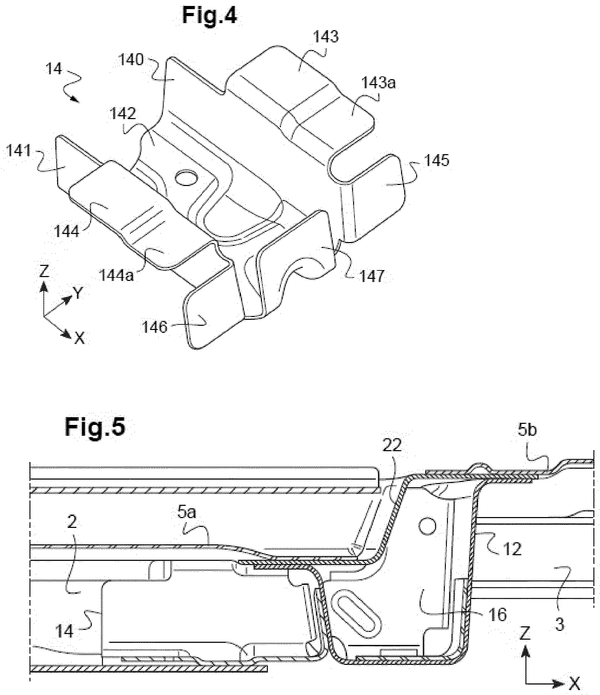

Dans l'exemple représenté, la première paroi est une paroi 22 indépendante tandis que la deuxième paroi est une partie avant 5a d'un plancher du soubassement. Cet agencement est particulièrement avantageux lorsque les parois latérales avant 120 et arrière 121 du profilé transversal 12 sont de différentes hauteurs, comme dans l'exemple représenté (voir par ex. fig. 5). Le plancher du véhicule ne s'étend alors pas dans un même plan horizontal sur toute la surface du soubassement, la partie avant 5a du plancher étant plus basse de la partie centrale 5b du plancher. Dans cet exemple, les parties avant 5a et centrale 5b du plancher sont fixées à la première paroi 22, au-dessus de celle-ci.

L'invention n'est toutefois pas limitée à ce mode de réalisation, et les parois latérales avant 120 et arrière 121 du profilé transversal peuvent être de même hauteur. C'est généralement le cas lorsque le plancher s'étend dans un unique plan horizontal sur toute la surface du soubassement 1. Dans ce cas, les première et deuxième parois fermant le profilé transversal et le profilé de liaison peuvent être formées du plancher du véhicule.

De préférence, quel que soit le mode de réalisation, les entretoises 16-18 s'étendent sur toute la hauteur du profilé transversal 12. Lorsque les parois latérales avant et arrière du profilé transversal 12 sont de différentes hauteurs, ces entretoises peuvent ainsi présenter une forme générale similaire à un L, tel que visible figure 5. D'autres formes sont toutefois possibles selon la forme de la paroi 22 et la différence de hauteur des parois latérales.

Les différents éléments de l'assemblage 10 sont typiquement en métal ou alliage métallique, de préférence en acier, et assemblés les uns aux autres par soudure, par exemple par soudure par points. Les longerons du soubassement sont également typiquement en métal ou alliage métallique, de préférence en acier, permettant une fixation par soudure de l'assemblage selon l'invention à ces longerons.

L'assemblage 10 selon l'invention est monté sur le soubassement de la manière décrite ci-après, les différents éléments 12, 14, 16-18 de cet assemblage 10 étant préalablement assemblés les uns aux autres.

Le profilé de liaison 14 est inséré à l'intérieur du longeron avant 2, au niveau de l'extrémité arrière de celui-ci. En particulier, le profilé de liaison 14 épouse la forme de l'extrémité arrière du longeron avant. Dans l'exemple représenté, le profilé de liaison 14 fait légèrement saillie hors du longeron avant 2 vers l'arrière, ici, uniquement sur la longueur de l'extrémité arrière 143a, 144a des rebords longitudinaux horizontaux 143, 144. On notera par ailleurs que ces extrémités arrière 143a, 144a sont situées dans un plan horizontal légèrement en dessous, verticalement, du reste du rebord 143, 144, par exemple de l'épaisseur du rebord transversal avant 123 du profilé transversal : de cette manière, ce rebord transversal avant 123 et les rebords longitudinaux horizontaux 143, 144 sont sensiblement dans un même plan horizontal.

Le profilé de liaison 14 peut ainsi être assemblé au longeron avant 2, typiquement par soudure. On notera que les rebords longitudinaux 203, 204 du longeron avant 2 pourront présenter une extrémité arrière 203a, 204a située dans un plan horizontal légèrement en dessous, verticalement, du reste du rebord 203, 204, par exemple de l'épaisseur des rebords longitudinaux horizontaux 143, 144, de sorte que les rebords longitudinaux 203, 204, du longeron avant s'étendent sensiblement dans un même plan horizontal que les rebords longitudinaux horizontaux 143, 144 du profilé de liaison et du rebord transversal avant 123 du profilé transversal. Ceci peut notamment faciliter la fermeture du longeron avant, du profilé de liaison et du profilé transversal et permet d'éviter les surépaisseurs.

Ensuite le profilé transversal 12 est fixé au longeron central 3. A cet effet, l'extrémité avant du longeron central présente des pattes de fixation transversales 305, 306 solidarisées à l'assemblage 10. Les extrémités avant 303a, 304a des rebords longitudinaux horizontaux 303, 304 du longeron central sont également solidarisées au rebord transversal arrière 124 du profilé transversal 12, notamment sous ce dernier. Ces extrémités 303a, 304a pourront également être situées dans un plan horizontal légèrement en dessous, verticalement, du reste du rebord 303, 304, par exemple de l'épaisseur du rebord transversal arrière 124 du profilé transversal 12 : de cette manière, ce rebord transversal arrière 124 et les rebords longitudinaux horizontaux 303, 304 du longeron central sont sensiblement dans un même plan horizontal.

Lorsque l'assemblage 10 est solidarisé au longeron avant 2 et au longeron central 3, le profilé transversal 12 est alors fermé par la paroi indépendante 22, puis le longeron avant 2 et le profilé de liaison 14 sont fermés par la mise en place de la partie avant 5a de plancher, et le longeron central est fermé par la mise en place de la partie centrale 5b de plancher. L'ordre de fermeture des longerons avant et central n'a bien entendu pas d'importance.

L'assemblage 10 selon l'invention permet un transfert d'efforts longitudinaux efficace malgré le déport entre les longerons. On comprendra que l'assemblage selon l'invention peut facilement être adapté à différentes parties centrales de soubassement : il suffit par exemple de positionner la troisième entretoise à la position appropriée selon l'écartement transversal entre les longerons.

## Revendications

1. Assemblage (10) de transfert d'efforts longitudinaux d'un soubassement de véhicule automobile, comprenant :
- un profilé transversal (12), s'étendant dans une direction transversale de l'assemblage en position d'utilisation, de forme creuse à section en forme de U pourvue de rebords horizontaux (123, 124) en position d'utilisation, **caractérisé en ce qu'**il comprend
- un profilé de liaison (14) longitudinal, s'étendant perpendiculairement au profilé transversal (12), de forme creuse à section en forme de U pourvue de rebords horizontaux (143, 144), dont l'ouverture est orientée dans la même direction que l'ouverture de la forme creuse du profilé transversal, le profilé de liaison présentant une extrémité arrière solidarisée au profilé transversal verticalement et longitudinalement,
- au moins trois entretoises (16-18) longitudinales disposées à l'intérieur du profilé transversal (12) et solidaires de celui-ci, deux des entretoises (16, 17) étant disposées en regard de parois latérales longitudinales (140, 141) du profilé de liaison (14), une troisième entretoise (18) étant disposée en une autre position destinée à être située en regard d'une paroi latérale longitudinale (300) d'un longeron (3) auquel l'assemblage doit être fixé.

2. Assemblage (10) selon la revendication 1, **caractérisé en ce qu'**il comprend au moins deux éléments de renfort (19, 21) présentant chacun une paroi de renfort (190, 210) en appui contre une paroi de fond (122) du profilé transversal et solidarisée à celle-ci, et **en ce que** chaque entretoise (16-18) fait partie d'un élément de renfort (19, 21) et est reliée à la paroi de renfort (190, 210) d'un élément de renfort.

3. Assemblage (10) selon la revendication 2, **caractérisé en ce que** la paroi de renfort de chaque élément de renfort et la paroi de fond du profilé transversal sont percées d'au moins un orifice traversant recevant chacun un écrou soudé (131, 132).

4. Assemblage (10) selon l'une quelconque des revendications 1 à 3, **caractérisé en ce que** l'extrémité arrière du profilé de liaison comporte des pattes de fixation arrière (145, 146), **en ce que** les entretoises comportent des pattes de fixation avant au profilé transversal et **en ce que** les pattes de fixation arrière du profilé de liaison (14) sont situées en regard des pattes de fixation avant des entretoises, de part et d'autre d'une paroi latérale avant (120) du profilé transversal.

5. Assemblage (10) selon l'une quelconque des revendications 1 à 4, **caractérisé en ce qu'**il comprend en outre une première paroi (22) assemblée aux rebords (123, 124) du profilé transversal (12) et le fermant et une deuxième paroi (5a) assemblée aux rebords (143, 144) du profilé de liaison (14) et le fermant.

6. Assemblage (10) selon l'une quelconque des revendications 1 à 5, **caractérisé en ce que** les différents éléments de l'assemblage sont en métal ou alliage métallique et sont solidarisés les uns aux autres par soudure.

7. Soubassement (1) de véhicule automobile comprenant un longeron avant (2) et un longeron central (3) qui ne sont pas situés dans le prolongement l'un de l'autre longitudinalement, chaque longeron (2, 3) présentant deux parois latérales (200, 201 ; 300, 301) reliées par une paroi de fond (202, 302) définissant une forme creuse à section en forme de U, chaque paroi latérale (200, 201 ; 301, 302) étant pourvue d'un rebord longitudinal horizontal (203, 204 ; 303 ; 304) en position d'utilisation, **caractérisé en ce qu'**il comprend un assemblage (10) selon l'une quelconque des revendications 1 à 6 reliant le longeron avant (2) au longeron central (3), le profilé de liaison de l'assemblage présentant une forme épousant la forme intérieure du longeron avant (2) et étant solidarisé au longeron avant (2), à l'intérieur de celui-ci, l'une des entretoises (18) longitudinales de l'assemblage (10) s'étendant dans le prolongement d'une paroi latérale (300) du longeron central (3), une extrémité avant du longeron central étant solidarisée au profilé transversal verticalement et horizontalement.

8. Soubassement (1) selon la revendication 7, **caractérisé en ce qu'**au moins une patte de fixation transversale avant (305, 306) du longeron central (3) est située en regard, longitudinalement, d'une patte de fixation transversale arrière (180) d'une entretoise (18), de part et d'autre d'une paroi latérale arrière (121) du profilé transversal.

9. Soubassement (1) selon la revendication 7 ou 8, présentant un plancher assemblé aux rebords des longerons et fermant ceux-ci, **caractérisé en ce que** le profilé de liaison (14) est fermé par une première paroi (5a) faisant partie du plancher et **en ce que** le profilé transversal (12) est fermé par une deuxième paroi (22) qui fait partie du plancher ou qui est une paroi indépendante (22) fixée au plancher.

10. Véhicule automobile comprenant un soubassement (1) selon l'une quelconque des revendications 7 à 9.

## Patentansprüche

1. Anordnung (10) zur Übertragung von Längskräften eines Unterbodens eines Kraftfahrzeugs, umfassend:
- ein sich in Gebrauchsposition in eine Richtung quer zu der Anordnung erstreckendes Querprofil (12) von hohler Form mit U-förmigem Querschnitt, das mit in Gebrauchsposition horizontalen Flanschen (123, 124) versehen ist, **dadurch gekennzeichnet, dass** es umfasst
- ein sich senkrecht zu dem Querprofil (12) erstreckendes, längs verlaufendes Verbindungsprofil (14) von hohler Form mit U-förmigem Querschnitt, das mit horizontalen Flanschen (143, 144) versehen ist und dessen Öffnung in die gleiche Richtung wie die Öffnung der hohlen Form des Querprofils ausgerichtet ist, wobei das Verbindungsprofil ein hinteres Ende aufweist, das vertikal und längs an dem Querprofil befestigt ist,
- mindestens drei längs verlaufende Abstandshalter (16-18), die innerhalb des Querprofils (12) angeordnet sind und integral mit diesem ausgebildet sind, wobei zwei der Abstandshalter (16, 17) gegenüber von längs verlaufenden Seitenwänden (140, 141) des Verbindungsprofils (14) angeordnet sind, wobei ein dritter Abstandshalter (18) in einer anderen Position angeordnet ist und dazu bestimmt ist, gegenüber einer längs verlaufenden Seitenwand (300) eines Längsträgers (3) zu liegen, an dem die Anordnung befestigt werden soll.

2. Anordnung (10) nach Anspruch 1, **dadurch gekennzeichnet, dass** sie mindestens zwei Aussteifungselemente (19, 21) umfasst, die jeweils eine Aussteifungswand (190, 210) umfassen, die an einer Bodenwand (122) des Querprofils anliegt und an dieser befestigt ist, und dass jeder Abstandshalter (16-18) zu einem Aussteifungselement (19, 21) gehört und mit der Aussteifungswand (190, 210) eines Aussteifungselements verbunden ist.

3. Anordnung (10) nach Anspruch 2, **dadurch gekennzeichnet, dass** die Aussteifungswand jedes Aussteifungselements und die Bodenwand des Querprofils mit mindestens einem Durchgangsloch durchbohrt sind, das jeweils eine Schweißmutter (131, 132) aufnimmt.

4. Anordnung (10) nach einem der Ansprüche 1 bis 3, **dadurch gekennzeichnet, dass** das hintere Ende des Verbindungsprofils hintere Befestigungslaschen (145, 146) umfasst, dass die Abstandshalter vordere Befestigungslaschen an dem Querprofil umfassen und dass die hinteren Befestigungslaschen des Verbindungsprofils (14) den vorderen Befestigungslaschen der Abstandshalter zu beiden Seiten einer vorderen Seitenwand (120) des Querprofils gegenüberliegen.

5. Anordnung (10) nach einem der Ansprüche 1 bis 4, **dadurch gekennzeichnet, dass** sie ferner eine erste Wand (22) umfasst, die an die Flansche (123, 124) des Querprofils (12) montiert ist und dieses verschließt, und eine zweite Wand (5a), die an die Flansche (143, 144) des Verbindungsprofils (14) montiert ist und dieses verschließt.

6. Anordnung (10) nach einem der Ansprüche 1 bis 5, **dadurch gekennzeichnet, dass** die verschiedenen Elemente der Anordnung aus Metall oder einer Metalllegierung bestehen und durch Schweißen aneinander befestigt sind.

7. Unterboden (1) eines Kraftfahrzeugs, der einen vorderen Längsträger (2) und einen mittleren Längsträger (3) umfasst, die nicht in Längsrichtung in der Verlängerung voneinander liegen, wobei jeder Längsträger (2, 3) zwei durch eine Bodenwand (202, 302) verbundene Seitenwände (200, 201; 300, 301) aufweist und eine hohle Form mit einem U-förmigen Querschnitt definiert, wobei jede Seitenwand (200, 201; 301, 302) mit einem in Gebrauchsposition horizontalen längs verlaufenden Flansch (203, 204; 303; 304) versehen ist, **dadurch gekennzeichnet, dass** er eine Anordnung (10) nach einem der Ansprüche 1 bis 6 umfasst, die den vorderen Längsträger (2) mit dem mittleren Längsträger (3) verbindet, wobei das Verbindungsprofil der Anordnung eine Form aufweist, die der inneren Form des vorderen Längsträgers (2) entspricht und an dem vorderen Längsträger (2) in dessen Inneren befestigt ist, wobei sich einer der längs verlaufenden Abstandshalter (18) der Anordnung (10) in der Verlängerung einer Seitenwand (300) des mittleren Längsträgers (3) erstreckt, wobei ein vorderes Ende des mittleren Längsträgers vertikal und horizontal an dem Querprofil befestigt ist.

8. Unterboden (1) nach Anspruch 7, **dadurch gekennzeichnet, dass** mindestens eine vordere quer verlaufende Befestigungslasche (305, 306) des mittleren Längsträgers (3) in Längsrichtung einer hinteren quer verlaufenden Befestigungslasche (180) eines Abstandshalters (18) beidseits einer hinteren Seitenwand (121) des Querprofils gegenüberliegt.

9. Unterboden (1) nach Anspruch 7 oder 8, der einen Boden aufweist, der an die Flansche der Längsträger montiert ist und diese verschließt, **dadurch gekennzeichnet, dass** das Verbindungsprofil (14) durch eine erste Wand (5a), die zu dem Boden gehört, verschlossen wird, und dass das Querprofil (12) durch eine zweite Wand (22), die zu dem Boden gehört oder die eine an dem Boden befestigte unabhängige Wand (22) ist, verschlossen wird.

10. Kraftfahrzeug, das einen Unterboden (1) nach einem der Ansprüche 7 bis 9 umfasst.

## Claims

1. Assembly (10) for transferring longitudinal forces of a motor vehicle understructure, comprising:
- a transverse profile (12), extending in a transverse direction of the assembly in the use position and of recessed shape with a U-shaped cross section provided with horizontal flanges (123, 124) in the use position, **characterized in that** the assembly comprises
- a longitudinal connecting profile (14), extending perpendicularly to the transverse profile (12) and of recessed shape with a U-shaped cross section provided with horizontal flanges (143, 144), of which the opening faces in the same direction as the opening in the recessed shape of the transverse profile, the connecting profile having a rear end secured to the transverse profile vertically and longitudinally,
- at least three longitudinal spacers (16-18) arranged inside the transverse profile (12) and secured thereto, two of the spacers (16, 17) being arranged facing longitudinal side walls (140, 141) of the connecting profile (14), a third spacer (18) being arranged in another position intended to be located facing a longitudinal side wall (300) of a side rail (3) to which the assembly is to be fastened.

2. Assembly (10) according to Claim 1, **characterized in that** it comprises at least two reinforcing elements (19, 21) each having a reinforcing wall (190, 210) bearing against a bottom wall (122) of the transverse profile and secured thereto, and **in that** each spacer (16-18) forms part of a reinforcing element (19, 21) and is connected to the reinforcing wall (190, 210) of a reinforcing element.

3. Assembly (10) according to Claim 2, **characterized in that** the reinforcing wall of each reinforcing element and the bottom wall of the transverse profile are pierced with at least one through-orifice each receiving a welded nut (131, 132).

4. Assembly (10) according to any one of Claims 1 to 3, **characterized in that** the rear end of the connecting profile has rear fastening tabs (145, 146), **in that** the spacers have front fastening tabs for fastening to the transverse profile and **in that** the rear fastening tabs of the connecting profile (14) are located facing the front fastening tabs of the spacers, on either side of a front side wall (120) of the transverse profile.

5. Assembly (10) according to any one of Claims 1 to 4, **characterized in that** it further comprises a first wall (22) joined to the flanges (123, 124) of the transverse profile (12) and closing the latter and a second wall (5a) joined to the flanges (143, 144) of the connecting profile (14) and closing the latter.

6. Assembly (10) according to any one of Claims 1 to 5, **characterized in that** the various elements of the assembly are made of metal or a metal alloy and are secured to one another by welding.

7. Motor vehicle understructure (1) comprising a front side rail (2) and a central side rail (3) which do not form an extension of one another longitudinally, each side rail (2, 3) having two side walls (200, 201; 300, 301) connected by a bottom wall (202, 302) defining a recessed shape with a U-shaped cross section, each side wall (200, 201; 301, 302) being provided with a horizontal longitudinal flange (203, 204; 303; 304) in the use position, **characterized in that** the understructure comprises an assembly (10) according to any one of Claims 1 to 6 connecting the front side rail (2) to the central side rail (3), the connecting profile of the assembly having a shape which matches the inner shape of the front side rail (2) and being secured to the front side rail (2), inside the latter, one of the longitudinal spacers (18) of the assembly (10) forming an extension of a side wall (300) of the central side rail (3), a front end of the central side rail being secured to the transverse profile vertically and horizontally.

8. Understructure (1) according to Claim 7, **characterized in that** at least one front transverse fastening tab (305, 306) of the central side rail (3) is located longitudinally facing a rear transverse fastening tab (180) of a spacer (18), on either side of a rear side wall (121) of the transverse profile.

9. Understructure (1) according to Claim 7 or 8, having a floor joined to the flanges of the side rails and closing the latter, **characterized in that** the connecting profile (14) is closed by a first wall (5a) forming part of the floor and **in that** the transverse profile (12) is closed by a second wall (22) which forms part of the floor or which is an independent wall (22) fastened to the floor.

10. Motor vehicle comprising an understructure (1) according to any one of Claims 7 to 9.
